# EUROPÄISCHE PATENTSCHRIFT

(11) **EP 2 138 428 B1**
(45) Veröffentlichungstag und Bekanntmachung des Hinweises auf die Patenterteilung: **28.03.2012**
(21) Anmeldenummer: 09005041.0
(22) Anmeldetag: 06.04.2009
(51) Int. Cl.: B65G 1/137

(54) **Kommissionierungseinheit**
Commissioning unit
Unité de commissionnement

(30) Priorität: 28.06.2008 DE 102008030812
(43) Veröffentlichungstag der Anmeldung: 30.12.2009
(73) Patentinhaber: Dr. Ing. h.c. F. Porsche AG, 70435 Stuttgart (DE)
(72) Erfinder: Eckert, Heinz, 71287 Weissach (DE); Spahn, Lothar, 74354 Besigheim (DE)
(74) Vertreter: Schmidt, Annett

(56) Entgegenhaltungen:
- EP-A- 1 862 406
- DE-A1- 10 243 475
- DE-A1- 10 243 477
- DE-U1- 20 311 674
- JP-A- 63 267 604
- US-A- 3 908 800

## Beschreibung

Die Erfindung betrifft eine Kommissionierungseinheit nach dem Oberbegriff des Patentanspruchs 1.

In der EP 1 862 406 A1 ist eine Kommissionierungseinheit beschrieben, die auf einem Fahrteil beweglich gehalten ist. Auch aus der JP 63267604 ist ein fahrbares Kommissionierregal bekannt. Ferner zeigt die DE 203 11 674 U1 einen Kommissionierwagen, der von Hand geschoben werden kann und mindestens zwei vertikal versetzte Ablagefächer aufweist, die in horizontaler Richtung verschiebbar gelagert sind. Die US 3,908,800 beschreibt ein Kommissionierregal, das auf Rollen verfahrbar gehalten ist.

Aus der DE 102 43 475 A1 sowie der DE 102 43 477 B4 sind Einrichtungen zur Montage von Motoren, nämlich von Brennkraftmaschinen eines Kraftfahrzeugs, bekannt. So weisen die aus diesem Stand der Technik bekannten Einrichtungen zur Montage von Brennkraftmaschinen ein Montageband auf, wobei auf dem Montageband einerseits Montageträger für Brennkraftmaschinen und andererseits als Kommissionierungsregale ausgebildete Kommissionierungseinrichtungen positionierbar sind. Eine auf dem Montageträger positionierte Brennkraftmaschine ist zusammen mit dem Kommissionierungsregal, auf dem zur Montage der Brennkraftmaschine benötigte Einzelteile bereitgehalten werden, zur Montage mit Hilfe des Montagebands durch einzelne Montagestatonen transportierbar.

Nach der Praxis bereitet die Handhabung der Kommissionierungsregale zwischen einer Kommissionierungsstation, in welcher dieselbe mit den benötigten Einzelteilen bestückt werden, und dem Montageband Schwierigkeiten. So ist es zwar bekannt, Kommissionierungsregale mit Hilfe von Kommissionierungswagen zwischen der Kommissionierungsstation und dem Montageband hin- und her zu transportieren, dass Positionieren der Kommissionierungsregale auf dem Kommissionierungswagen sowie das Posttionieren der Kommissionierungsregale auf dem Montageband ist jedoch bislang umständlich.

Hiervon ausgehend liegt der vorliegenden Erfindung das Problem zu Grunde eine neuartige Kommissionierungseinheit zu schaffen. Dieses Problem wird durch eine Kommissionierungseinheit gemäß Patentanspruch 1 gelöst. Erfindungsgemäß ist bei der Übergabe des Kommissionierungsregals vom Kommissionierungswagen an das Montageband sowie umgekehrt bei der Übergabe des Kommissionierungsregals vom Montageband an den Kommissionierungswagen das Kommissionierungsregal schräg vom Kommissionierungswagen entfernbar bzw. auf demselben platzierbar.

Die hier vorliegende Erfindung schlägt eine Kommissionierungseinheit aus einem Kommissionierungsregal und einem Kommissionierungswagen vor, bei welchem die Übergabe des Kommissionierungsregals zwischen dem Kommissionierungswagen und dem Montageband in einer schräg verlaufenden Richtung erfolgt. Eine solche schräge Übergabe des Kommissionierungsregals zwischen dem Kommissionierungswagen und der Montagestation erlaubt selbst dann eine problemlose Handhabung der Kommissionierungsregale im Bereich des Montagebands, wenn an einem Montageträger des Montagebands Motoren mit großen Abmessungen aufgenommen werden.

Vorzugsweise weist eine Aufnahme des Kommissionierungswagens für das Kommissionierungsregal eine Höhe auf, die an die Höhe einer Aufnahmeplattform des Montagebands für das Kommissionierungsregal angepasst ist. In diesem Fall kann dann das Kommissionierungsregal zwischen dem Kommissionierungswagen und dem Montageband ohne Zuhilfenahme von Hubeinrichtungen zwischen dem Montageband und dem Kommissionierungswagen übergeben werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines Kommissionierungswagens einer erfin- dungsgemäßen Kommissionierungseinheit;
- Fig. 2: den Kommissionierungswagen der Fig. 1 in Seitenansicht;
- Fig. 3: den Kommissionierungswagen der Fig. 1 in Vorderansicht;
- Fig. 4: den Kommissionierungswagen der Fig. 1 in Draufsicht; und
- Fig. 5: eine perspektivische Ansicht eines Kommissionierungsregals einer erfin- dungsgemäßen Kommissionierungseinheit.

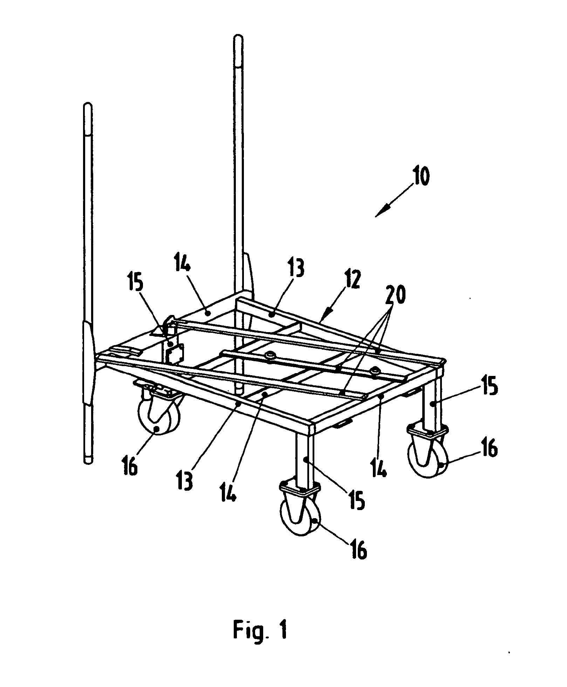

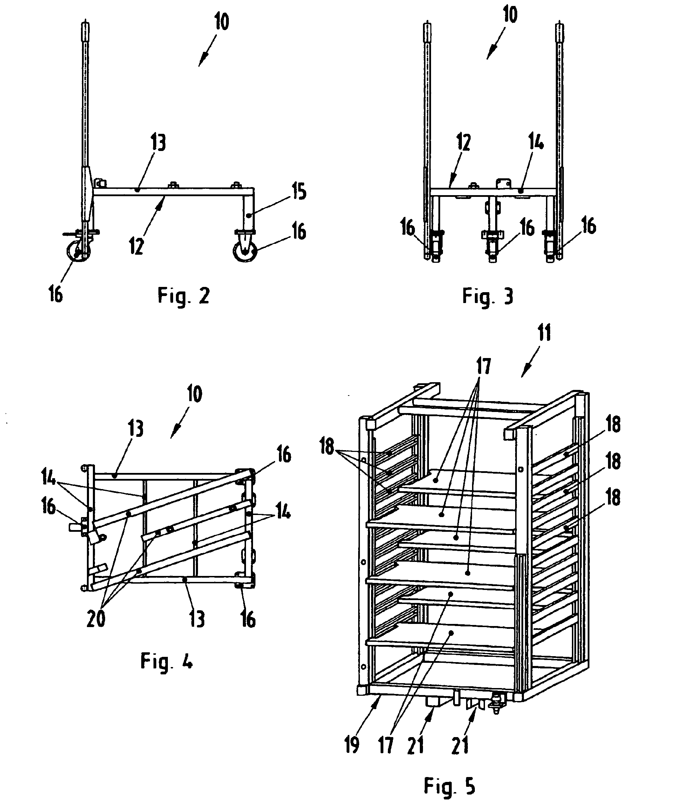

Die Erfindung betrifft eine Kommissionierungseinheit, die ein Kommissionierungsregal und einen Kommissionierungswagen umfasst. Fig. 1 bis 4 zeigen unterschiedliche Ansichten eines Kommissionierungswagens 10 einer erfindungsgemäßen Kommissionierungseinheit, Fig. 5 zeigt eine Ansicht eines Kommissionierungsregals 11 der erfindungsgemäßen Kommissionierungseinheit.

Der Kommissionierungswagen 10 der erfindungsgemäßen Kommissionierungseinheit verfügt über eine Aufnahme 12 für das Kommissionierungsregal 11, wobei die Aufnahme 12 von Seitenholmen 13 und Querholmen 14 gebildet ist. An der Aufnahme 12 des Kommissionierungswagens 10 greifen über Stützen 15 Laufrollen 16 an. Über die Laufrollen 16 kann der Kommissionierungswagen 10 auf einem Boden einer Montagehalle verfahren werden.

Das Kommissionierungsregal 11 wird gemäß Fig. 5 von einem Rahmen gebildet, in dem übereinander mehrere Schubladen 17 positioniert sind, die der Aufnahme von zur Montage benötigten Einzelteilen dienen. Die Schubladen sind in Führungsschienen 18 geführt, die sich an Seitenwänden des Kommissionierungsrahmens 11 erstrecken.

Das Kommissionierungsregal 11 ist auf der Aufnahme 12 des Kommissionierungswagens 10 positionierbar. Bei der Übergabe des Kommissionierungsregals 11 vom Kommissionierungswagen 10 an ein nicht gezeigtes Montageband sowie umgekehrt bei der Übergabe des Kommissionierungsregals 11 vom Montageband an den Kommissionierungswagen 10 ist das Kommissionierungsregal 11 schräg vom Kommissionierungswagen 10 entfernbar bzw. auf demselben positionierbar.

Hierzu sind der Aufnahme 12 des Kommissionierungswagens 10 für das Kommissionierungsregal 11 und einem Boden 19 des Kommissionierungsregals 11 zusammenwirkende Führungsschienen 20, 21 zugeordnet, die sich schräg zu Seitenwänden des Kommissionierungsregals 11 sowie schräg zu den Seitenholmen 13 des Kommissionierungswagens 10 erstrecken. Über die Führungsschienen 20, 21 wird gewährleistet, dass das Kommissionierungsregal 11 schräg zum Kommissionierungswagen 10 beim Entfernen desselben vom Kommissionierungswagen 10 bzw. beim Platzieren desselben auf dem Kommissionierungswagen 10 verlagert werden kann.

Die Höhe der Aufnahme 12 des Kommissionierungswagens 10 ist an eine Höhe einer Aufnahmeplattform des Montagebands für das Kommissionierungsregal 11 angepasst. Hierdurch kann gewährleistet werden, dass bei der Übergabe des Kommissionierungsregals 11 zwischen dem Montageband und dem Kommissionierungswagen 10 keine Hilfsmittel wie Hubeinrichtungen benötigt werden.

Die erfindungsgemäße Kommissionierungseinheit aus dem Kommissionierungswagen 10 und dem Kommissionierungsregal 11 ist auf einem führerlosen Transportfahrzeug positionierbar und vom dem führerlosen Transportfahrzeug verlagerbar. Hierzu ist das führerlose Transportfahrzeug unter den Kommissionierungswagen 10 der erfindungsgemäßen Kommissionierungseinheit einführbar, sodass der Kommissionierungswagen 10 gegebenenfalls zusammen mit dem Kommissionierungsregal 11 auf dem führerlosen Transportfahrzeug aufsitzt und von demselben verlagert werden kann.

## Patentansprüche

1. Kommissionierungseinheit mit einem Kommissionierungsregal, auf dem zur Montage einer zu montierende Einheit, insbesondere eines zu montierenden Motors, benötigte Einzelteilen bereitgehalten werden, und mit einem Kommissionierungswagen, auf dem das Kommissionierungsregal zum Transport desselben zwischen einer Kommissionierungsstation und einem Montageband positionierbar, wobei
bei der Übergabe des Kommissionierungsregals (11) vom Kommissionierungswagen (10) an das Montageband sowie umgekehrt bei der Übergabe des Kommissionierungsregals (11) vom Montageband an den Kommissionierungswagen (10) das Kommissionierungsregal (11) schräg vom Kommissionierungswagen (10) entfernbar bzw. auf demselben platzierbar ist, **dadurch gekennzeichnet, dass** einer Aufnahme (12) des Kommissionierungswagens (10) für das Kommissionierungsregal (11) und einem Boden (19) des Kommissionierungsregals (11) zusammenwirkende Führungsschienen (20, 21) zugeordnet sind, die sich schräg zu Seitenwänden des Kommissionierungsregals (11) sowie schräg zu Seitenholmen des Kommissionierungswagens (10) erstrecken.

2. Kommissionierungseinheit nach Anspruch 1, **dadurch gekennzeichnet, dass** die Aufnahme (12) des Kommissionierungswagens (10) eine Höhe aufweist, die an die Höhe einer Aufnahmeplattform des Montagebands für das Kommissionierungsregal (11) angepasst ist.

3. Kommissionierungseinheit nach einem der Ansprüche 1 bis 2, **dadurch gekennzeichnet, dass** dieselbe auf einem führerlosen Transportfahrzeug positionierbar und vom führerlosen Transportfahrzeug verlagerbar ist.

4. Kommissionierungseinheit nach Anspruch 3, **dadurch gekennzeichnet, dass** das führerlose Transportfahrzeug unter den Kommissionierungswagen einführbar ist, so dass der Kommissionierungswagen zusammen mit dem Kommissionierungsregal (11) auf dem führerlosen Transportfahrzeug aufsitzt.

## Claims

1. Order-picking unit having an order-picking rack, on which individual parts are held in readiness which are required for the assembly of a unit to be assembled, in particular of an engine to be assembled, and having an order-picking carriage, on which the order-picking rack can be positioned in order to transport it between an order-picking station and an assembly line, it being possible for the order-picking rack (11) to be removed obliquely from the order-picking carriage (10) or to be placed on the latter during the transfer of the order-picking rack (11) from the order-picking carriage (10) to the assembly line and conversely during the transfer of the order-picking rack (11) from the assembly line to the order-picking carriage (10), **characterized in that** a receptacle (12) of the order-picking carriage (10) for the order-picking rack (11) and a bottom (19) of the order-picking rack (11) are assigned interacting guide rails (20, 21) which extend obliquely with respect to side walls of the order-picking rack (11) and obliquely with respect to side beams of the order-picking carriage (10).

2. Order-picking unit according to Claim 1, **characterized in that** the receptacle (12) of the order-picking carriage (10) has a height which is adapted to the height of a receiving platform of the assembly line for the order-picking rack (11).

3. Order-picking unit according to either of Claims 1 and 2, **characterized in that** it can be positioned on a driverless transport vehicle and can be moved by the driverless transport vehicle.

4. Order-picking unit according to Claim 3, **characterized in that** the driverless transport vehicle can be introduced below the order-picking carriage, with the result that the order-picking carriage is seated together with the order-picking rack (11) on the driverless transport vehicle.

## Revendications

1. Unité de préparation des commandes comprenant un rayonnage de préparation des commandes sur lequel sont disposées des pièces détachées requises pour le montage d'une unité à monter, notamment d'un moteur à monter, et comprenant un chariot de préparation des commandes, sur lequel peut être positionné le rayonnage de préparation des commandes en vue de son transport entre un poste de préparation des commandes et une chaîne de montage, dans laquelle, lors du transfert du rayonnage de préparation des commandes (11) depuis le chariot de préparation des commandes (10) sur la chaîne de montage, et inversement, lors du transfert du rayonnage de préparation des commandes (11) depuis la chaîne de montage sur le chariot de préparation des commandes (10), le rayonnage de préparation des commandes (11) peut être enlevé obliquement du chariot de préparation des commandes (10) ou peut être placé obliquement sur celui-ci, **caractérisée en ce que** l'on associe à un logement (12) du chariot de préparation des commandes (10) pour le rayonnage de préparation des commandes (11) et à un fond (19) du rayonnage de préparation des commandes (11) des rails de guidage coopérants (20, 21), qui s'étendent obliquement vers des parois latérales du rayonnage de préparation des commandes (11) et obliquement par rapport aux montants latéraux du chariot de préparation des commandes (10).

2. Unité de préparation des commandes selon la revendication 1, **caractérisée en ce que** le logement (12) du chariot de préparation des commandes (10) présente une hauteur qui est adaptée à la hauteur d'une plate-forme de réception de la chaîne de montage pour le rayonnage de préparation des commandes (11).

3. Unité de préparation des commandes selon l'une quelconque des revendications 1 et 2, **caractérisée en ce que** celle-ci peut être positionnée sur un véhicule de transport sans conducteur et peut être déplacée par le véhicule de transport sans conducteur.

4. Unité de préparation des commandes selon la revendication 3, **caractérisée en ce que** le véhicule de transport sans conducteur peut être introduit sous le chariot de préparation des commandes, de sorte que le chariot de préparation des commandes repose, conjointement avec le rayonnage de préparation des commandes (11), sur le véhicule de transport sans conducteur.
